# EUROPEAN PATENT SPECIFICATION

(11) **EP 2 852 216 B1**
(45) Date of publication and mention of the grant of the patent: **22.06.2016**
(21) Application number: 13882623.5
(22) Date of filing: 10.09.2013
(51) Int. Cl.: H04W 36/20, H04W 16/14, H04L 1/00, H04W 52/24, H04W 72/04, H04W 72/08, H04W 88/06, H04W 88/10, H04W 24/02, H04W 84/04, H04W 84/12

(54) **METHOD AND DEVICE FOR REDUCING MUTUAL INTERFERENCE BETWEEN DEVICES COEXISTENT IN NETWORK OF NEIGHBORING FREQUENCY BAND**
VERFAHREN UND VORRICHTUNG ZUR VERRINGERUNG VON GEGENSEITIGEN INTERFERENZEN ZWISCHEN KOEXISTIERENDEN VORRICHTUNGEN IN EINEM NETZWERK EINES BENACHBARTEN FREQUENZBANDES
PROCÉDÉ ET DISPOSITIF DE RÉDUCTION DU BROUILLAGE MUTUEL ENTRE DES DISPOSITIFS COEXISTANT DANS UN RÉSEAU SE TROUVANT DANS DES BANDES DE FRÉQUENCES VOISINES

(30) Priority: 09.06.2013 CN 201310229752
(43) Date of publication of application: 25.03.2015
(73) Proprietor: ZTE Corporation, Shenzhen, Guangdong 518057 (CN)
(72) Inventor: YANG, Jiaojiao, Shenzhen Guangdong 518057 (CN)
(74) Representative: Brevalex
(86) International application number: PCT/CN2013/083256
(87) International publication number: WO 2014/198088

(56) References cited:
- WO-A1-2012/114937
- CN-A- 102 378 195
- CN-A- 103 119 992
- "3rd Generation Partnership Project; Technical Specification Group Radio Access Network; Evolved Universal Terrestrial Radio Access (E-UTRA); Study on signalling and procedure for interference avoidance for in-device coexistence (Release 11)", 3GPP STANDARD; 3GPP TR 36.816, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.2.0, 22 December 2011 (2011-12-22), pages 1-44, XP050555147, [retrieved on 2011-12-22]
- MEDIATEK: "Analysis in In-Device Coexistence Interference Avoidance", 3GPP DRAFT; R2-104444 IN-DEVICE COEXISTENCE ANALYSIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 17 August 2010 (2010-08-17), XP050451859, [retrieved on 2010-08-17]
- SUDHIR KUMAR BAGHEL ET AL: "Coexistence possibilities of LTE with ISM technologies and GNSS", 2011 NATIONAL CONFERENCE ON COMMUNICATIONS (NCC), 1 January 2011 (2011-01-01), pages 1-5, XP55001826, DOI: 10.1109/NCC.2011.5734742 ISBN: 978-1-61-284090-1
- ZHENPING HU ET AL: "Interference avoidance for in-device coexistence in 3GPP LTE-advanced: challenges and solutions", IEEE COMMUNICATIONS MAGAZINE, IEEE SERVICE CENTER, PISCATAWAY, US, vol. 50, no. 11, 1 November 2012 (2012-11-01), pages 60-67, XP011472336, ISSN: 0163-6804, DOI: 10.1109/MCOM.2012.6353683

## Description

### TECHNICAL FIELD

The disclosure relates to the field of wireless communication technologies, and in particular to a method and device for reducing mutual interference among equipment-sharing networks with adjacent bands.

### BACKGROUND

With the rapid development of mobile communication technologies in recent years, terminal equipment functions become increasingly diversified and complicated. Particularly, with the development of third-generation (3G) and fourth-generation (4G) mobile communication technologies, there is an increasing market demand for smart terminals. A terminal equipment such as a smart phone is generally required to support multiple wireless access technologies simultaneously, such as Long Term Evolution (LTE) networks and Wireless Local Area Networks (WLAN). As such access technologies share a band or are in bands close to each other, once such access technologies work together, an access technology in a transmitting state will generate leakage to an adjacent channel due to nonlinearity of a device such as a power amplifier or a mixer. The leakage is generally measured using an Adjacent Channel Leakage Ratio (ACLR). If another access technology sharing the same device is in a receiving state, then the another access technology will suffer from sever interference due to the leakage. Such interference is generally referred to as mutual interference caused by equipment-sharing (or mutual interference due to co-existence). Typically, solutions capable of preventing mutual interference caused by equipment-sharing roughly include hardware and software solutions.

With a hardware solution, isolation between adjacent bands is generally increased, which requires a filter with high suppression and a antenna system with high isolation to remove an interfering signal on adjacent LTE and WLAN channels. However, in an actual design, the use of a filter with high suppression is bound to introduce a certain path loss, which undermines the transmitting and receiving performance of a product and causes power dissipation to the product. It is not easy to design an antenna system with both a high isolation and an ultra-wideband feature.

With a software solution, an LTE system working in a band adjacent to a WLAN working band is monitored; an interference avoiding strategy is implemented when the difference between the Channel Quality Indicator (CQI) reported by a User Equipment (UE) furthest to an interference source and the CQI reported by a UE nearest to the interference source is greater than a predefined threshold. In the solution, an LTE base station has to detect the quality of a signal reported by a terminal and adjusts a sub-band occupied by the UE. Determination by a base station is difficult to implement, with poor universality.

Therefore, there is currently no simple universal method for handling existing mutual interference among equipment-sharing networks with adjacent bands.

"3rd Generation Partnership Project; Technical Specification Group Radio Access Network; Evolved Universal Terrestrial Radio Access (E-UTRA); Study on signalling and procedure for interference avoidance for in-device coexistence (Release 11)", 3GPP STANDARD; 3GPP TR 36.816FRANCE, vol. RAN WG2, no. V11.2.0, 22 December 2011, pages 1-44, investigates mechanisms for interference avoidance from signalling and procedure point of view to facilitate the coexistence scenario that LTE and GPS/ ISM radio within the same device working in adjacent frequencies or sub-harmonic frequencies through existing RRM mechanisms, while minimizing impact on legacy LTE UEs.

MEDIATEK: "Analysis in In-Device Coexistence Interference Avoidance", 3GPP DRAFT; R2-104444 INDEVICE COEXISTENCE ANALYSIS, FRANCE, vol. RAN WG2, no. Madrid, Spain; 20100823, discloses solutions in in-device coexistence interference avoidance.

Based on the above prior art documents, there is a need for an improved solution for reducing co-existence interference at a terminal equipment side.

### SUMMARY

Embodiments of the disclosure provide a method and device for reducing mutual interference among equipment-sharing networks with adjacent bands, capable of providing a simple universal method for handling existing mutual interference among equipment-sharing networks with adjacent bands.

The features of the method and device according to the present disclosure are defined in the independent claims, and the preferable features according to the present invention are defined in the dependent claims.

With embodiments of the disclosure, quality of a first signal is monitored; and when the quality of the first signal fails to reach a preset quality threshold, a working state of a second signal is adjusted reasonably to reduce mutual interference among equipment-sharing networks with adjacent bands. With this simple and easy method, impact of mutual interference can be reduced effectively, providing a simple universal method for handling existing mutual interference among equipment-sharing networks with adjacent bands.

### BRIEF DESCRIPTION OF THE DRAWINGS

Fig.1 is a flowchart of a method for reducing mutual interference among equipment-sharing networks with adjacent bands according to an embodiment of the disclosure;
Fig.2 is a block diagram of a structure of a device for reducing mutual interference among equipment-sharing networks with adjacent bands according to an embodiment of the disclosure;
Fig.3 is a block diagram of a structure of a device for reducing mutual interference among equipment-sharing networks with adjacent bands according to an embodiment of the disclosure;
Fig.4 is a block diagram of a system including a device for reducing mutual interference between an LTE network and a WLAN sharing an equipment according to an Embodiment 2 of the disclosure;
Fig.5 is a work flow chart of a device for reducing mutual interference between an LTE network and a WLAN sharing an equipment according to an Embodiment 2 of the disclosure;
Fig.6 is a schematic diagram of a state of transmitting spectra after applying a method for reducing mutual interference between an LTE network and a WLAN sharing an equipment according to an Embodiment 2 of the disclosure; and
Fig.7 is a schematic diagram of a state of transmitting spectra after applying a method for reducing mutual interference between an LTE network and a WLAN sharing an equipment according to an Embodiment 2 of the disclosure.

### DETAILED DESCRIPTION

Embodiments of the disclosure provide a method and device for reducing mutual interference among equipment-sharing networks with adjacent bands, capable of providing a simple universal method for handling existing mutual interference among equipment-sharing networks with adjacent bands. The disclosure is further elaborated below with reference to drawings and embodiments. Note that specific embodiments described herein are merely illustrative and are not intended to limit the disclosure.

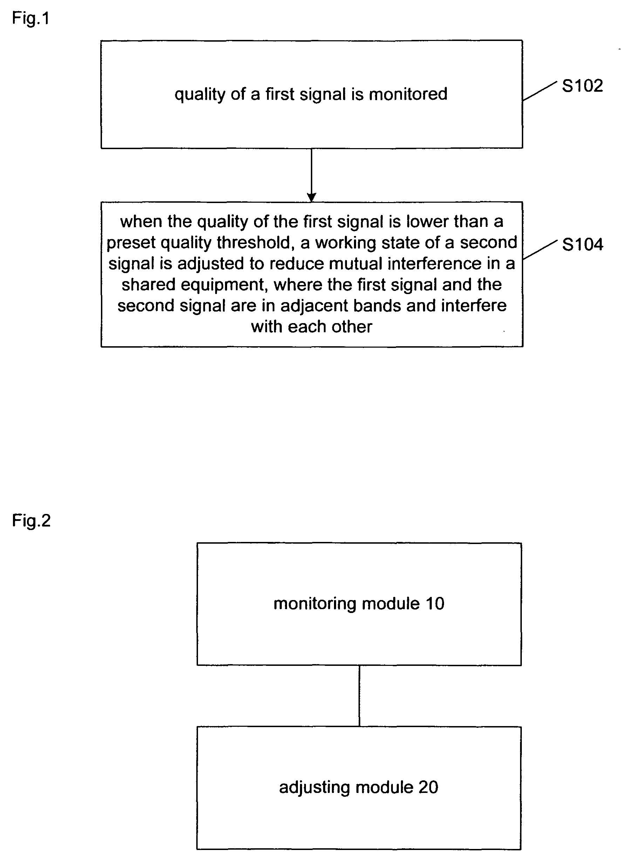

At present, mutual interference occurs frequently among signals working simultaneously in adjacent bands in a same system. Accordingly, an embodiment of the disclosure provides a method for reducing mutual interference among equipment-sharing networks sharing a band. As shown in Fig.1, the flow of the method includes steps S102-S104.

In S102, quality of a first signal is monitored.

In S104, when the quality of the first signal is lower than a preset quality threshold, a working state of a second signal is adjusted to reduce mutual interference in a shared equipment, where the first signal and the second signal are in adjacent bands and interfere with each other.

During implementation, when the quality of the first signal becomes lower than the preset quality threshold, it means that the first signal suffers from severe interference by the second signal, in which case the working state of the second signal is adjusted to reduce the interference to the first signal. For example, a working channel of the second signal is adjusted to keep away from a working band of the first signal to reduce the interference to the first signal.

The first signal and the second signal can be a variety of signals. Currently the most common signals with mutual interference in a shared equipment are a WLAN signal and an LTE signal. Of course, there may be other signals in a similar case such as WLAN and WIMax signals. In the method, a method for reducing mutual interference between an LTE network and a WLAN sharing an equipment is described below, including that: quality of the LTE signal is monitored; and when the quality of the LTE signal is lower than the preset quality threshold, a WLAN working state is adjusted to reduce mutual interference in a shared equipment.

With the embodiment, quality of the LTE signal is monitored; and when the quality of the LTE signal fails to reach the preset quality threshold, a WLAN working state is adjusted reasonably to reduce mutual interference between the LTE network and the WLAN sharing an equipment. By applying this simple and easy method, impact of mutual interference can be reduced effectively, providing a simple universal method for handling existing mutual interference between the LTE network and the WLAN sharing an equipment.

The quality of the LTE signal may be an SINR and/or an RSRP. In the embodiment, a combination of SINR and RSRP is monitored, by determining whether an SINR of the LTE signal is lower than a preset SINR threshold and/or determining whether an RSRP of the LTE signal is lower than a preset RSRP threshold.

A WLAN working state may be adjusted according to acquired information. The acquired information may be a WLAN working channel and/or a WLAN transmitting power and a state of an accessing WIFI user.

When the acquired information is the WLAN working channel, the WLAN working channel may be adjusted according to the quality of the LTE signal, by transmitting data on a working channel with minimal mutual interference with a working channel of the LTE signal.

When the acquired information is the WLAN transmitting power and the state of an accessing WIFI user, the WLAN transmitting power may be adjusted according to the state of the WIFI user to reduce mutual interference between LTE and WLAN bands.

During implementation, if no ideal effect can be achieved by a single method, then the two methods can be used together. For example, when the WLAN working channel has already been adjusted to be a highest channel or a lowest channel and the quality of the LTE signal is still lower than the preset quality threshold, the WLAN transmitting power of a terminal may be adjusted according to the state of the WIFI user to reduce mutual interference between LTE and WLAN bands.

An embodiment of the disclosure further provides a device for reducing mutual interference among equipment-sharing networks with adjacent bands, a structure of which is as shown in Fig.2. The device includes: a monitoring module 10 configured for monitoring quality of a first signal; and an adjusting module 20 coupled to the monitoring module 10 and configured for: when the quality of the first signal is lower than a preset quality threshold, adjusting a working state of a second signal to reduce mutual interference in a shared equipment, wherein the first signal and the second signal are in adjacent bands and interfere with each other.

When the first signal is an LTE signal and the second signal is a WLAN signal, the monitoring module 10 is configured for monitoring quality of the LTE signal, and the adjusting module 20 is configured for: when the quality of the LTE signal is lower than the preset quality threshold, adjusting a WLAN working state to reduce mutual interference in a shared equipment.

The monitoring module 10 may also be configured for: determining whether an SINR of the LTE signal is lower than a preset SINR threshold and/or determining whether an RSRP of the LTE signal is lower than a preset RSRP threshold.

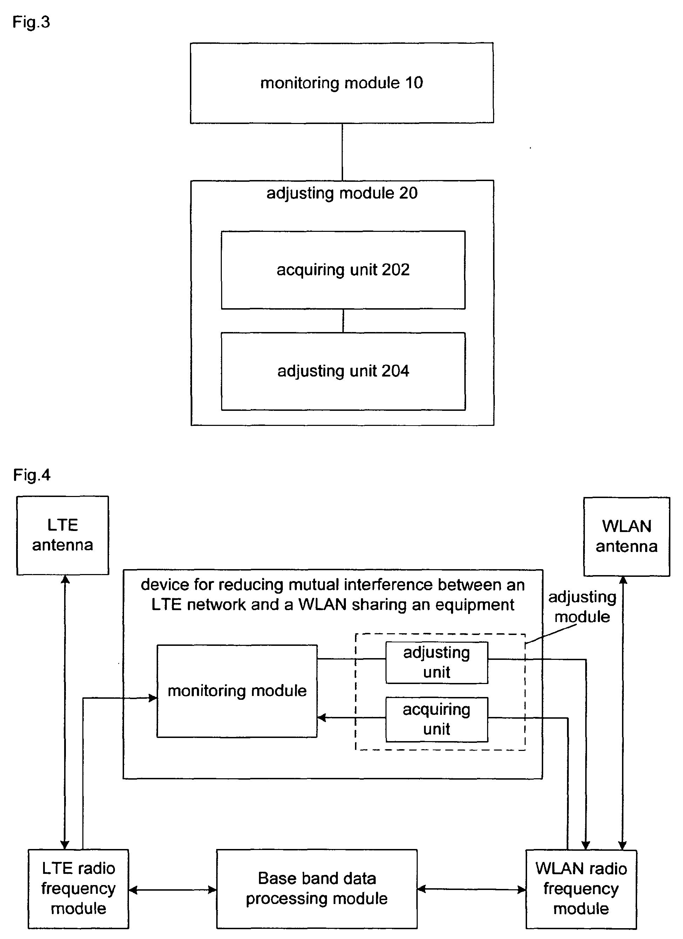

Fig.3 is a block diagram of another structure of the device. As shown in Fig.3, the adjusting module 20 may further include: an acquiring unit 202 and an adjusting unit 204 coupled to the acquiring unit 202. The acquiring unit 202 can acquire various kinds of information, and the adjusting unit 204 may function according to information acquired by the acquiring unit 202. The acquiring unit 202 may be configured for: acquiring a WLAN working channel, and/or acquiring a WLAN transmitting power and a state of an accessing WIFI user.

When the acquiring unit 202 acquires the WLAN working channel, the adjusting unit 204 may be configured for: adjusting the WLAN working channel according to the quality of the LTE signal, by transmitting data on a working channel with minimal mutual interference with a working channel of the LTE signal.

When the acquiring unit 202 acquires the WLAN transmitting power and the state of an accessing WIFI user, the adjusting unit 204 may be configured for: adjusting the WLAN transmitting power according to the state of the WIFI user to reduce mutual interference between LTE and WLAN bands, wherein the state of the WIFI user indicates a parametric limit allowing connection of an equipment used by the WIFI user.

When the acquiring unit 202 acquires the WLAN working channel as well as the WLAN transmitting power and the state of an accessing WIFI user, the adjusting unit 204 can work according to the actual case. For example, the adjusting unit may be configured for: adjusting the WLAN working channel according to the quality of the LTE signal; and when the WLAN working channel has already been adjusted to be a highest channel or a lowest channel and the quality of the LTE signal is still lower than the preset quality threshold, adjusting the WLAN transmitting power according to the state of the WIFI user to reduce mutual interference between LTE and WLAN bands.

### Embodiment 1

In Embodiment 1, a first signal is an LTE signal, and a second signal is a WLAN, thus, a method and device for reducing mutual interference between an LTE network and a WLAN sharing an equipment are provided for handling mutual interference between an LTE network and a WLAN sharing an equipment.

The method for reducing mutual interference between an LTE network and a WLAN sharing an equipment provided in the embodiment includes that: a device for reducing mutual interference between an LTE network and a WLAN sharing an equipment monitors the quality of a signal received by an LTE terminal working in a band adjacent to a WLAN working band, wherein the quality of the signal is reflected by a combination of SINR and RSRP, and an interference avoiding strategy is implemented when the combination of SINR and RSRP of the received LTE signal is lower than a certain threshold. The RSRP refers to a reference signal receiving power acquired by cell reference signal measurement, and is the linear average of receiving power as RSRE of corresponding cell reference signals in two time slots within the receiving bandwidth of a system. The SINR refers to the ratio of the strength of a received useful signal to the strength of a received interfering signal (interference plus noise).

Further, the quality of a received signal may be monitored by: after an LTE network is accessed, determining the strength of an acquired base station (eNB) signal, reporting the RSRP and the SINR, and adjusting a WLAN working state by analyzing the RSRP and the SINR.

Further, the interference avoiding strategy may specifically be implemented by: reporting a WLAN working channel, a WLAN transmitting power, and a state of a WIFI user accessing the equipment, adjusting the WLAN working channel according to the RSRP and the SINR in key LTE working time, by transmitting data on a working channel with less mutual interference with a working channel of the LTE signal; or when the WLAN channel has already been adjusted to be a highest channel or a lowest channel, adjusting the WLAN transmitting power of the equipment according to the state of the WIFI user to reduce mutual interference between LTE and WLAN bands.

Specifically, the LTE band adjacent to the WLAN working band may be TDD-LTE Band38, Band40, Band41 or FDD-LTE Band7. With the method for reducing mutual interference between an LTE network and a WLAN sharing an equipment according to the embodiment, the mutual interference may be prevented effectively.

The embodiment further provides a device for reducing mutual interference between an LTE network and a WLAN sharing an equipment, including an adjusting module and a monitoring module. Each module of the device may work together with a terminal. A terminal with mutual interference may include: an LTE module, a WLAN module, a base band data processing module, an LTE antenna and a WLAN antenna.

The LTE module mainly converts data sent by the base band data processing module into a digital base band signal to be transmitted, modulates the digital base band signal such that the digital base band signal meets a radio frequency index required by LTE transmission so that the digital base band signal can be transmitted in space, demodulates a spatially received radio frequency signal in an LTE band into a corresponding digital base band signal and sends the demodulated digital base band signal to the base band data processing module, such that the base band data processing module may carry out a relevant data operation to record the RSRP of the received base station signal and the acquired SINR.

The WLAN module mainly converts data sent by the base band data processing module into a digital base band signal to be transmitted, modulates the digital base band signal such that the digital base band signal meets a radio frequency index required by WLAN transmission so that the digital base band signal can be transmitted in space, demodulates a spatially received radio frequency signal in a WLAN band into a corresponding digital base band signal and sends the demodulated digital base band signal to the base band data processing module, such that the base band data processing module t may carry out a relevant data operation. The WLAN working channel, the WLAN transmitting power, and the state of a WIFI user accessing the equipment are recorded.

The base band data processing module mainly processes LTE and WLAN base band signals, carries out protocol-layer work, carries out transmission and exchange of two formated digital signals, implements wireless data transmission, and ensures correct standard wireless access.

The LTE antenna mainly serves for LTE radio frequency signal transmitting and receiving.

The WLAN antenna mainly serves for WLAN radio frequency signal transmitting and receiving.

In the device for reducing mutual interference between an LTE network and a WLAN sharing an equipment provided in the embodiment, the monitoring module serves for receiving the RSRP and the SINR reported by the LTE radio frequency module, and the acquiring unit of the adjusting module is configured for: acquiring the WLAN working channel, the WLAN transmitting power, and the state of an WIFI user accessing the equipment recorded by the WLAN radio frequency module, and reporting the acquired information to the monitoring module. An instruction is sent to the adjusting module according to a scheduling algorithm inside the monitoring module to call the adjusting unit to adjust the WLAN working state.

### Embodiment 2

Fig.4 is a block diagram of a system including a device for reducing mutual interference between an LTE network and a WLAN sharing an equipment. A base band data processing module is configured for processing digital base band signals of two bands and implementing information exchange and feedback. An LTE radio frequency module amplifies a received signal sent by the base band data processing module by analogue amplification and radiates the amplified signal through a corresponding antenna, and at the same time receives an LTE signal sent by a base station. A WLAN radio frequency module also propagates information via the WLAN antenna and receives a WLAN signal sent by another mobile terminal. While radiating energy out, the LTE radio frequency module feeds the RSRP of the received base station signal and the SINR of the current environment back to a monitoring module. Meanwhile, the WLAN radio frequency module feeds information on a frequency and a transmitting power used in communication of the WLAN radio frequency module with another mobile terminal, as well as the state of a WIFI user accessing the equipment, back to the acquiring unit of an adjusting module. After receiving the RSRP and the SINR reported by the LTE radio frequency module, the monitoring module sends an instruction according to a locally stored algorithm to call an adjusting unit of the adjusting module to configure the WLAN working state. The LTE and WLAN antennae serve for transmitting and receiving LTE and WLAN radio frequency signals, respectively.

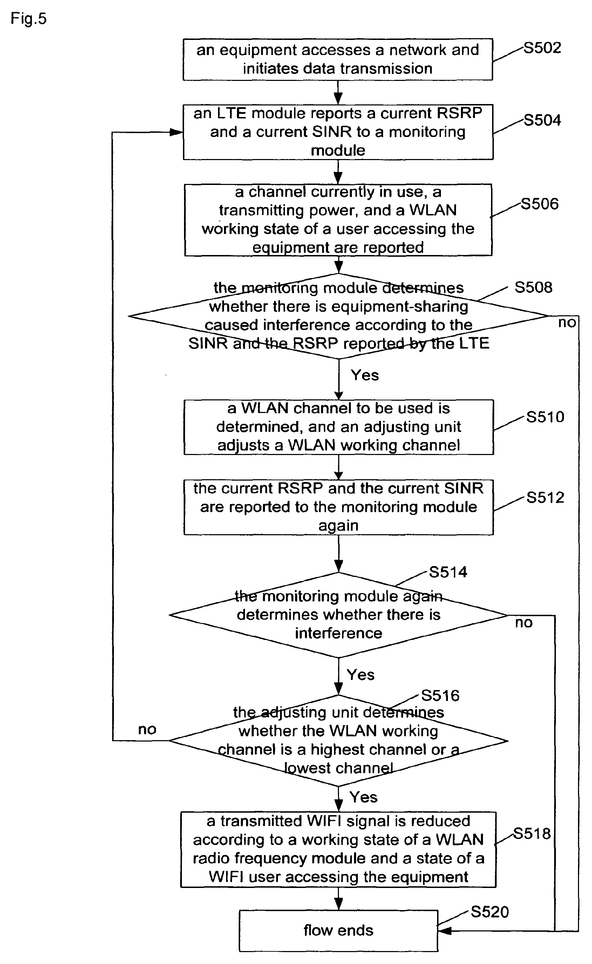

Fig.5 is a work flow chart of the device for reducing mutual interference between an LTE network and a WLAN sharing an equipment as shown in Fig.4. The work flow includes step S502 to step S520 as follows.

In step S502, the equipment is powered on, gets online, and starts data transmission.

In step S504, the LTE radio frequency module reports a current RSRP and a current SINR to the monitoring module.

In step S506, the WLAN radio frequency module reports the WLAN working channel, the WLAN transmitting power, and the state of a WIFI user accessing the equipment to the acquiring unit, which forwards the received information to the monitoring module.

In step S508, the monitoring module determines whether the local equipment is suffering mutual interference according to an algorithm stored locally. If the local equipment is suffering no mutual interference, Step S520 is executed, otherwise if the local equipment is suffering mutual interference, Step S510 is executed.

In step S510, a WLAN channel to be used is determined, and the adjusting unit adjusts the WLAN working channel to the determined channel.

In step S512, after the adjustment completes, the LTE radio frequency module again reports the current RSRP and the current SINR to the monitoring module.

In step S514, the monitoring module again determines whether the local equipment is suffering mutual interference according to data received. If the local equipment is suffering no mutual interference, Step S520 is executed, otherwise if the local equipment is still suffering mutual interference, Step S516 is executed.

In step S516, the adjusting unit checks if the configured WLAN channel is a highest channel or a lowest channel. If the configured WLAN channel is neither a highest channel nor a lowest channel, the flow goes back to Step S504, otherwise if the configured WLAN channel is a highest channel or a lowest channel, the flow goes to Step S518.

In step S518, without impacting the use by a WIFI user accessing the equipment, the adjusting unit reduces a transmitted WIFI signal according to the working state of the WLAN radio frequency module and the state of the WIFI user accessing the equipment to reduce WLAN interference to LTE.

Steps S514-S518 are repeated until mutual interference is low enough such that the signal meets the quality threshold preset in the monitoring module, and then the adjustment completes. Eventually, mutual interference caused by equipment-sharing by LTE and WLAN is minimized.

The flow ends at step S520.

The effect achieved by the embodiment is described below with reference to schematic diagrams after the use of the device in a specific LTE band.

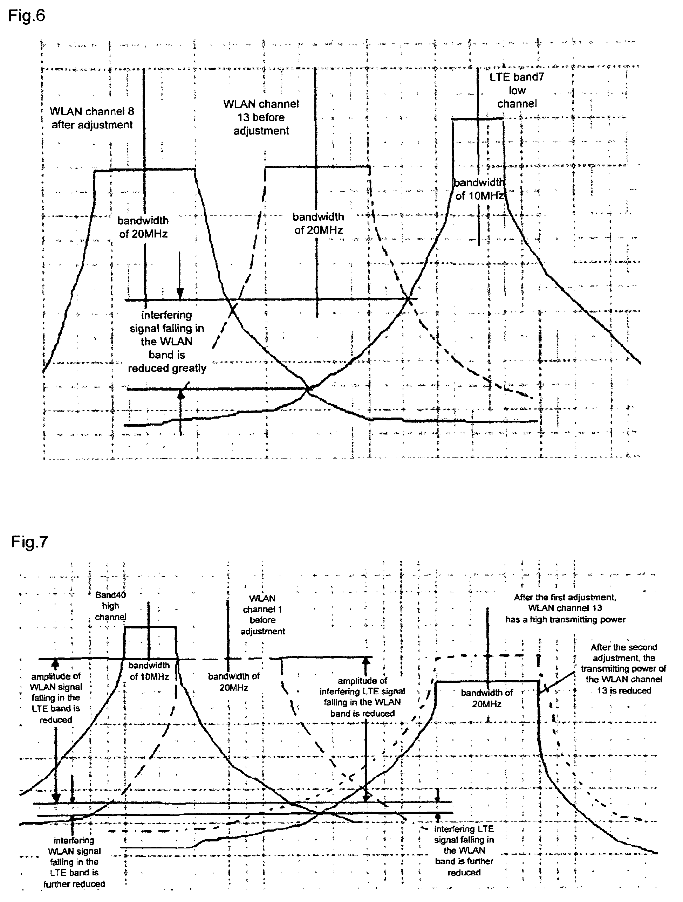

With an example of equipment-sharing by LTE band7 and WLAN band, Fig.6 shows a schematic diagram of transmitting spectra adjustment after applying the method for reducing mutual interference between an LTE network and a WLAN sharing an equipment, with an LTE working channel being a B7 low channel with a working bandwidth of 10MHz, and a WLAN working channel being a channel 13 with a working bandwidth of 20MHz. After the monitoring module acquires signal quality information reported by the LTE radio frequency module, and the acquiring unit acquires information reported by the WLAN radio frequency module and sends the acquired information to the monitoring module, it may be determined that the shared equipment is suffering mutual interference, and an instruction may be sent to adjust the WLAN working channel to a channel 8. It can be seen that after the adjustment, interference of a transmitted LTE B7 signal to WIFI is reduced greatly, thereby preventing a reduced data transmission rate of the equipment due to interference.

With an example of equipment-sharing by LTE band40 and WLAN band, Fig.7 shows a schematic diagram of transmitting spectra adjustment after applying the method for reducing mutual interference between an LTE network and a WLAN sharing an equipment, with an LTE working channel being a B40 high channel with a working bandwidth of 10MHz, and a WLAN working channel being a channel 1 with a working bandwidth of 20MHz. After the monitoring module acquires signal quality information reported by the LTE radio frequency module, and the acquiring unit acquires information reported by the WLAN radio frequency module and sends the acquired information to the monitoring module, it may be determined that the shared equipment is suffering mutual interference, and an instruction may be sent to adjust the WLAN working channel to a channel 13. It can be seen that after the adjustment, both interference of a transmitted LTEB40 signal to WIFI and WIFI interference to LTE B40 are reduced greatly. The LTE radio frequency module again reports the current state of the RSRP and the SINR to the monitoring module. The monitoring module analyzes that mutual interference remains, and monitors, through the acquiring unit, that the working channel of the WLAN radio frequency module is channel 13 (the highest channel), and thus instructs, according to the state of a WIFI user accessing the equipment, to lower the WLAN transmitting power properly, relieving mutual interference caused by equipment-sharing by the LTE BAND40 and the WLAN.

What described are merely embodiments of the disclosure and are not intended to limit the protection scope of the disclosure.

### INDUSTRIAL APPLICABILITY

With embodiments of the disclosure, quality of a first signal is monitored; and when the quality of the first signal fails to reach a preset quality threshold, a working state of a second signal is adjusted reasonably to reduce mutual interference among equipment-sharing networks with adjacent bands. With this simple and easy method, impact of mutual interference can be reduced effectively, providing a simple universal method for handling existing mutual interference among equipment-sharing networks with adjacent bands.

## Claims

1. A method for reducing interference among an access technology in a transmitting state and another access technology in a receiving state, both the access technologies being supported in a terminal equipment and working in adjacent bands, **characterized in that** the method comprises steps of:
monitoring, by the terminal equipment, quality of a first signal (S102) received by the terminal equipment; and
when the quality of the first signal is lower than a preset quality threshold, adjusting, by the terminal equipment, a working state of a second signal, wherein the first signal and the second signal are in adjacent bands and interfere with each other (S104),
wherein the first signal comprises at least one of a Long Term Evolution (LTE) signal and a WIMax signal, and the second signal comprises at least a Wireless Local Area Networks (WLAN) signal,
wherein the method comprises: when the first signal is a Long Term Evolution (LTE) signal and the second signal is a Wireless Local Area Networks (WLAN) signal,
monitoring quality of the LTE signal; and
when the quality of the LTE signal is lower than the preset quality threshold, adjusting a WLAN working state,
wherein the step of adjusting a WLAN working state comprises steps of:
acquiring a WLAN working channel and adjusting the WLAN working channel according to the quality of the LTE signal, by transmitting data on a working channel with minimal mutual interference with a working channel of the LTE signal; and
when the WLAN working channel has already been adjusted to be a highest channel or a lowest channel and the quality of the LTE signal is still lower than the preset quality threshold, acquiring a WLAN transmitting power and a state of an accessing WIFI user, and adjusting the WLAN transmitting power according to the state of the WIFI user to reduce mutual interference between LTE and WLAN bands, wherein the state of the WIFI user indicates a parametric limit allowing connection of an equipment used by the WIFI user.

2. The method according to claim 1, wherein the step of monitoring quality of the LTE signal comprises:
determining whether a Signal to Interference plus Noise Ratio (SINR) of the LTE signal is lower than a preset SINR threshold and/or determining whether a Reference Signal Receiving Power (RSRP) of the LTE signal is lower than a preset RSRP threshold.

3. A device for reducing interference among an access technology in a transmitting state and another access technology in a receiving state, both the access technologies being supported in a terminal equipment and working in adjacent bands, **characterized in that** the device is located on the terminal equipment and comprises:
a monitoring module (10) configured for: monitoring quality of a first signal received by the terminal equipment; and
an adjusting module (20) configured for: when the quality of the first signal is lower than a preset quality threshold, adjusting a working state of a second signal, wherein the first signal and the second signal share a band and interfere with each other,
wherein the monitoring module (10) is configured for: when the first signal is a Long Term Evolution (LTE) signal, monitoring quality of the LTE signal; and
the adjusting module (20) is configured for: when the second signal is a Wireless Local Area Networks (WLAN) signal and the quality of the LTE signal is lower than the preset quality threshold, adjusting a WLAN working state,
wherein the adjusting module comprises:
an acquiring unit configured for: acquiring a WLAN working channel, and/or acquiring a WLAN transmitting power and a state of an accessing WIFI user; and
an adjusting unit configured for: adjusting the WLAN working channel according to the quality of the LTE signal, by transmitting data on a working channel with minimal mutual interference with a working channel of the LTE signal; and when the WLAN working channel has already been adjusted to be a highest channel or a lowest channel and the quality of the LTE signal is still lower than the preset quality threshold, adjusting the WLAN transmitting power according to the state of the WIFI user to reduce mutual interference between LTE and WLAN bands, wherein the state of the WIFI user indicates a parametric limit allowing connection of an equipment used by the WIFI user.

4. The device according to claim 3, wherein
the monitoring module (10) is further configured for: determining whether a Signal to Interference plus Noise Ratio (SINR) of the LTE signal is lower than a preset SINR threshold and/or determining whether a Reference Signal Receiving Power (RSRP) of the LTE signal is lower than a preset RSRP threshold.

## Patentansprüche

1. Verfahren zur Verringerung von Interferenzen bei einer Zugangstechnologie in einem Übertragungsstatus und einer anderen Zugangstechnologie in einem Empfangsstatus, wobei beide diese Zugangstechnologien in einer Endeinrichtung liegen und in benachbarten Bändern arbeiten, **dadurch gekennzeichnet, daß** das Verfahren die folgenden Schritte aufweist: Überwachen der Qualität eines ersten Signals (S102) durch die Endeinrichtung, wobei das Signal von der Endeinrichtung erhalten wird, und dann, wenn die Qualität des ersten Signals geringer ist als ein vorgegebener Qualitätswert, Justieren durch die erste Endeinrichtung, einen Arbeitszustand eines zweiten Signals, wobei das erste Signal und das zweite Signal sich in benachbarten Bändern befinden und aufeinandertreffen (S104), wobei des weiteren das erste Signal wenigstens eines der beiden folgenden Signale beinhaltet, nämlich ein Long Term Evolution (LTE) Signal und ein WIMax Signal, und das zweite Signal wenigstens ein Wireless Local Area Networks (WLAN) Signal ist, wobei ferner das Verfahren folgendes umfaßt: wenn das erste Signal ein Long Term Evolution (LTE) Signal und das zweite Signal ein Wireless Local Area Networks (WLAN) Signal ist, Überwachen der Qualität des LTE Signals und dann, wenn die Qualität des LTE Signals geringer ist als der vorgegebene Qualitätswert, Einstellen eines WLAN Arbeitszustandes, wobei der Schritt der Einstellung eines WLAN Arbeitszustandes folgende Schritte umfaßt: Erfassen eines WLAN Arbeitskanals und Einstellen des WLAN Arbeitskanals gemäß der Qualität des LTE Signals durch Übertragung von Daten auf einen Arbeitskanal bei minimaler gegenseitiger Interferenz mit einem Arbeitskanal des LTE Signals, und dann, wenn der WLAN Arbeitskanal bereits eingestellt worden ist, so daß einen höchsten oder einen tiefsten Kanal bildet, und die Qualität des LTE Signals immer noch geringer ist als der vorgegebene Qualitätswert, erfassen des WLAN Übertragungsstroms gemäß dem Zustand des WIFI Benutzers, um dadurch die gegenseitige Interferenz zwischen LTE und WLAN Bändern zu verringern, wobei der Zustand des WIFI Benutzers eine bestimmte Grenze anzeigt, die den Anschluß einer Einrichtung zuläßt, welche von dem WIFI Benutzer verwendet wird.

2. Verfahren nach Anspruch 1, **dadurch gekennzeichnet, daß** der Schritt der Qualitätsüberwachung des LTE Signals beinhaltet: Bestimmen, ob ein Signal für Interferenz plus Noise Ratio (SINR) des LTE Signals geringer ist als ein vorgegebener SINR -Wert und / Wert bestimmen, ob ein Reference Signal Receiving Power (RSRP) des LTE Signals geringer ist als ein vorgegebener RSRP Grenzwert.

3. Vorrichtung zur Interferenzverringerung bei einer Zugangstechnologie in einem Übertragungszustand und einer anderen Zugangstechnologie in einem Empfangszustand, wobei beide Zugangstechnologien in einer Endeinrichtung angeordnet sind und in benachbarten Bändern arbeiten, **dadurch gekennzeichnet, daß** die Vorrichtung auf der Endeinrichtung angeordnet ist und folgende Elemente aufweist: Einen Überwachungsmodul (10), der für die Überwachungsqualität eines ersten Signals gebaut ist, das von der Endeinrichtung empfangen wird, und einen Einstellmodul (20), der dazu dient, daß dann, wenn die Qualität des ersten Signals geringer ist als ein vorgegebener Qualitätswert, ein Arbeitszustand eines zweiten Signals eingestellt wird, wobei das erste Signal und das zweite Signal ein Band teilen und sich in die Quere kommen, wobei ferner der Überwachungsmodul (10) so gebaut ist, daß dann, wenn das erste Signal ein Long Term Evolution (LTE) Signal ist, die Qualität des LTE Signals überwacht wird, und wobei der Einstellmodul (20) so gebaut ist, daß dann, wenn das zweite Signal ein Wireless Local Area Networks (WLAN) Signal ist und die Qualität des LTE Signals geringer ist als der vorgegebene Qualitätswert, ein WLAN Arbeitszustand eingestellt wird, wobei des weiteren der Einstellmodul folgendes aufweist: eine Erfassungseinheit, die so gebaut ist, daß ein WLAN Arbeitskanal erfaßt wird und / oder ein WLAN Übertragungsstrom sowie ein Zustand eines hinzutretenden WIFI Benutzers erfaßt wird, und wobei schließlich eine Einstelleinheit vorhanden ist, die so gebaut ist, daß der WLAN Arbeitskanal gemäß der Qualität des LTE Signals eingestellt wird, indem Daten an einen Arbeitskanal übertragen werden, der eine minimale wechselseitige Interferenz mit einem Arbeitskanal des LTE Signals aufweist, und wenn der WLAN Arbeitskanal bereits eingestellt worden ist, so daß er ein höchster Kanal oder ein tiefster Kanal ist, und die Qualität des LTE Signals noch unter dem vorgegebenen Qualitätswert liegt, der WLAN Übertragungsstrom gemäß dem Zustand des WIFI Benutzers eingestellt wird, um dadurch die wechselseitige Interferenz zwischen LTE und WLAN Bändern zu verringern, wobei der Zustand des WIFI Benutzers eine parametrische Grenze anzeigt, die den Anschluß einer Einrichtung ermöglicht, welche von dem WIFI Benutzer benutzt wird.

4. Vorrichtung nach Anspruch 3, **dadurch gekennzeichnet, daß** der Überwachungsmodul (10) des weiteren dazu dient festzustellen, ob ein Signal an das Interference plus Noise Ratio (SINR) des LTE Signals geringer ist als ein vorgegebener SINR Grenzwert und / oder festzustellen, ob ein ReferenzSignal-Empfangsstrom (RSRP) des LTE Signals kleiner ist als ein vorgegebener RSRP Grenzwert.

## Revendications

1. Procédé pour réduire l'interférence parmi une technologie d'accès dans un état de transmission et une autre technologie d'accès dans un état de réception, les deux technologies d'accès étant supportées dans un équipement terminal et fonctionnant dans des bandes adjacentes, **caractérisé en ce que** le procédé comprend les étapes de :
surveillance, par l'équipement terminal, de la qualité d'un premier signal (S102) reçu par l'équipement terminal ; et
lorsque la qualité du premier signal est inférieure à un seuil de qualité préréglé, ajustement, par l'équipement terminal, d'un état de fonctionnement d'un second signal, dans lequel le premier signal et le second signal sont dans des bandes adjacentes et interfèrent l'un avec l'autre (S104),
dans lequel le premier signal comprend au moins l'une parmi un signal d'évolution à long terme (LTE) et un signal WIMax, et le second signal comprend au moins un signal de réseaux locaux sans fil (WLAN),
dans lequel le procédé comprend : lorsque le premier signal est un signal d'évolution à long terme (LTE) et le second signal est un signal de réseaux locaux sans fil (WLAN),
la surveillance de la qualité du signal de LTE ; et
lorsque la qualité du signal de LTE est inférieure au seuil de qualité préréglé, l'ajustement d'un état de fonctionnement de WLAN,
dans lequel l'étape d'ajustement d'un état de fonctionnement de WLAN comprend les étapes de :
acquisition d'un canal de fonctionnement de WLAN et ajustement du canal de fonctionnement de WLAN selon la qualité du signal de LTE, en transmettant des données sur un canal de fonctionnement avec interférence mutuelle minimale avec un canal de fonctionnement du signal de LTE ; et
lorsque le canal de fonctionnement de WLAN a déjà été ajusté pour être un canal le plus élevé ou un canal le plus bas et la qualité du signal de LTE est toujours inférieure au seuil de qualité préréglé, acquisition d'une puissance de transmission de WLAN et d'un état d'un utilisateur de WIFI d'accès, et ajustement de la puissance de transmission de WLAN selon l'état de l'utilisateur de WIFI pour réduire l'interférence mutuelle entre des bandes de LTE et de WLAN, dans lequel l'état de l'utilisateur de WIFI indique une limite paramétrique permettant la connexion d'un équipement utilisé par l'utilisateur de WIFI.

2. Procédé selon la revendication 1, dans lequel l'étape de surveillance de la qualité du signal de LTE comprend :
la détermination qu'un rapport signal/interférence plus bruit (SINR) du signal de LTE est inférieur ou non à un seuil de SINR préréglé et/ou la détermination qu'une puissance de réception de signal de référence (RSRP) du signal de LTE est inférieure ou non à un seuil de RSRP préréglé.

3. Dispositif pour réduire l'interférence parmi une technologie d'accès dans un état de transmission et une autre technologie d'accès dans un état de réception, les deux technologies d'accès étant supportées dans un équipement terminal et fonctionnant dans des bandes adjacentes, **caractérisé en ce que** le dispositif est situé sur l'équipement terminal et comprend :
un module de surveillance (10) configuré pour : surveiller la qualité d'un premier signal reçu par l'équipement terminal ; et
un module d'ajustement (20) configuré pour : lorsque la qualité du premier signal est inférieure à un seuil de qualité préréglé, ajuster un état de fonctionnement d'un second signal, dans lequel le premier signal et le second signal partagent une bande et interfèrent l'un avec l'autre,
dans lequel le module de surveillance (10) est configuré pour : lorsque le premier signal est un signal d'évolution à long terme (LTE), surveiller la qualité du signal de LTE ; et
le module d'ajustement (20) est configuré pour : lorsque le second signal est un signal de réseaux locaux sans fil (WLAN) et la qualité du signal de LTE est inférieure au seuil de qualité préréglé, ajuster un état de fonctionnement de WLAN,
dans lequel le module d'ajustement comprend :
une unité d'acquisition configurée pour : acquérir un canal de fonctionnement de WLAN, et/ou acquérir une puissance de transmission de WLAN et un état d'un utilisateur de WIFI d'accès ; et
une unité d'ajustement configurée pour : ajuster le canal de fonctionnement de WLAN selon la qualité du signal de LTE, en transmettant des données sur un canal de fonctionnement avec interférence mutuelle minimale avec un canal de fonctionnement du signal de LTE ; et lorsque le canal de fonctionnement de WLAN a déjà été ajusté pour être un canal le plus élevé ou un canal le plus bas et la qualité du signal de LTE est toujours inférieure au seuil de qualité préréglé, ajuster la puissance de transmission de WLAN selon l'état de l'utilisateur de WIFI pour réduire l'interférence mutuelle entre des bandes de LTE et de WLAN, dans lequel l'état de l'utilisateur de WIFI indique une limite paramétrique permettant la connexion d'un équipement utilisé par l'utilisateur de WIFI.

4. Dispositif selon la revendication 3, dans lequel
le module de surveillance (10) est en outre configuré pour : déterminer si un rapport signal/interférence plus bruit (SINR) du signal de LTE est inférieur ou non à un seuil de SINR préréglé et/ou déterminer si une puissance de réception de signal de référence (RSRP) du signal de LTE est inférieure ou non à un seuil de RSRP préréglé.
